# EUROPEAN PATENT APPLICATION

(11) **EP 2 169 898 A1**
(43) Date of publication of application: **31.03.2010**
(21) Application number: 08165079.8
(22) Date of filing: 25.09.2008
(51) Int. Cl.: H04L 29/06

(54) **Method of and telecommunication apparatus for mitigating Distributed Denial-of-Service attacks in SIP packet networks**

(71) Applicant: Fraunhofer-Gesellschaft zur Förderung der angewandten Forschung e.V., 80686 München (DE)
(72) Inventor: Ehlert, Sven, 10247, Berlin (DE)
(74) Representative: Baumgärtel, Gunnar

(57) **Abstract**

The invention provides for a method and a telecommunications apparatus for mitigating Denial-of-Service attacks in packet networks that use the Session Initiation Protocol (SIP) for communication. The method comprises initially blocking all incoming SIP communication of a user agent at a security entry point, determining a pinhole parameter of the SIP communication of the user agent, and allowing a subsequent or further SIP communication of the user agent to pass the security entry point if the subsequent or further SIP communication of the user agent comprises the pinhole parameter.

## Description

The present invention regards a method of and a telecommunication apparatus for mitigating Distributed Denial-of-Service attacks in packet networks that use the Session Initiation Protocol (SIP) for communication.

The Session Initiation Protocol (SIP) has established itself as the de-facto standard for current Voice-over-IP (VolP) networks. The protocol is specified in RFC 3261. SIP is deployed in a client-server infrastructure where SIP clients (User Agent clients) contact a central SIP Proxy (i.e. a server) to manage ongoing sessions.

With its increase in popularity, SIP becomes a viable target for attackers. Especially as SIP is based on free, open standards, malicious users can easily mount attacks that target weaknesses in the specification.

A rather simple to launch attack is a Denial-of-Service (DoS) flooding attack where the adversary sends a high amount of traffic to a target SIP proxy with the goal to terminate or slow down its operation. Such messages would consist of regular well-formated SIP messages like INVITE or REGISTER, but due to the sheer mass of the messages the proxy encounters, it won't be able to process them in due time. Other attacks may include Message Tampering, Call Hijacking, call fraud, password hacking and other threats.

The problem underlying the present invention is to provide for an effective method and apparatus that allow mitigating DoS flooding attacks in SIP IP-Networks.

This problem is solved by a method with the features of claim 1, a telecommunications apparatus with the features of claim 11 and a computer program product with the features of claim 15. Embodiments of the invention are identified in the dependent claims.

Accordingly, in one aspect of the invention there is provided a method in which initially all incoming SIP communication of a user agent is blocked at a security entry point. A pinhole parameter of the SIP communication of the user agent is determined. A subsequent or further SIP communication of the user agent is allowed to pass the security entry point only if the subsequent or further SIP communication of the user agent comprises the pinhole parameter.

The security entry point is thus configured to block most incoming traffic, but allows some exceptions ("pinholes"), so that traffic with special characteristics can pass the security entry point barrier. The inventive concept allows denying access to all distributed flooding sources that do not follow the SIP specification meticulously. The invention is especially effective against flooding sources that utilise spoofed IP addresses, a common technique of attackers to evade detection.

The security entry point in one embodiment is a firewall, in particular a packet filter or an Application-Layer Gateway that works as a relay on the application level. In another embodiment, the security entry point is a SIP Proxy or a SIP Back-to-Back User Agent. The security entry point may be implemented in a Session Border Controller of a SIP Proxy. If implemented as a firewall, the firewall may be, e.g., a separate unit in front of a SIP proxy or may be a module of a SIP proxy or its Session Border Controller.

A further SIP Communication in the context of claim 1 is a SIP communication which is not the subsequent SIP Communication after an initial SIP Communication that has been blocked, but a further SIP Communication such as a second or third retransmission of an initial SIP Communication.

In one embodiment the term "SIP Communication" refers to an individual message on which the inventive pinholing is applied. Accordingly, the subsequent or further retransmission of the same message passes the pinhole.

For effective resource depletion an attacker needs to initiate multiple different transactions, which all will be blocked by the inventive security entry point. Only if an attacker User Agent conformed to the SIP specification and re-sent all previous requests (meaning, it also implements a message timeout detection scheme), it would be able to pass through the pinholing security entry point of the invention.

The packet network may be a SIP IP-Network. SIP IP-Networks are Internet-Protocol (IP)-Networks that use the Session Initiation Protocol (SIP) for communication. Examples for such networks are SIP Voice-over-IP (VolP) Networks, IPTV Networks and IP Multimedia Subsystem (IMS) Next Generation Networks.

In one embodiment, the step of allowing SIP communication of the user agent to pass the security entry point comprises the steps of setting up dynamic security policies on the basis of the determined pinhole parameter and of deploying the set up security policies at the security entry point. Further, in an embodiment, these steps comprise providing a white list of stored values of pinhole parameters and checking if the determined pinhole parameter is in the white list. If so, the corresponding SIP Communication is allowed to pass the security entry point. If not, the corresponding SIP Communication is dropped. At the same time the pinhole parameter is added to the white list such that the SIP communication, when retransmitted, is then allowed to pass the security entry point.

If the security entry point is a firewall, the security policies are firewall rules that are provided to the firewall.

In a further embodiment, the security policies are provided to the security entry point after each update, i.e., a firewall table is dynamically updated in real-time as requests arrive. As in some implementations this may lead to an unwanted latency increase, alternatively, new security policies are accumulated and a collection of new policies is provided to the security entry point periodically. For example, in case of a firewall as security entry point, instead of updating every firewall rule individually, multiple rules are installed or removed at the firewall in one operation, thus minimizing firewall management operations.

A further embodiment of the invention regards the method and means of how to create pinhole rules at the security entry point, e.g., which parameters should be considered for specifying the pinholes. There are several options for the pinhole parameter. If considering a basic attack tool, it is likely that it will generate attack traffic with spoofed source IP addresses. This is likely, as otherwise the attack will be filtered out by common security solutions. Most commercial SIP security products use threshold-based prevention mechanisms against Denial of Service attacks. This is achieved by allowing only a limited number of requests from one source within a given time frame. Such mechanism is not effective against messages with spoofed IP addresses. For the pinholing algorithm to be effective against such attacks, as pinhole parameter is chosen in one embodiment the source IP address, i.e., every first message from one given IP address will be dropped, while further requests from this same address will pass through. With this pinhole parameter, prevention is also possible for Distributed Denial of Service attacks with real IP addresses if the attack generation tools do not implement the correct SIP retransmission method.

However, if attackers initiate multiple requests with their real IP address or with random, but fixed spoofed IP addresses, only the first request would be blocked while all further requests could pass unhindered through the just generated pinhole in case the IP address is used as the only pinhole parameter. Therefore, in other embodiments, the transaction ID or session ID of the considered SIP request is considered as the pinhole parameter (i.e., by evaluating Via, or Call-ID header fields and related tags). This allows only messages from the same context to pass the security entry point.

Transactions are fundamental components of SIP. A transaction is a request sent by a client transaction to a server transaction, along with all responses to that request sent from the server transaction back to the client transactions. Each transaction is defined by an ID. A session identifier or session ID is a piece of data that is used in network communications to identify a session, i.e. a series of related message exchanges.

In a further embodiment, SIP communication of the user agent is allowed to pass the security entry point only after SIP Communication with the determined pinhole parameter has been retransmitted by the user agent at least once. In other words, the pinhole is generated not after the first request of a user agent, but after the first or even a further retransmission of the message.

In such embodiment, the amount of generated security policies is significantly reduced. In case of a spoofed message attack prevention it is very likely that no security policies would be generated at all. On the other hand, regular users would encounter a minimal delay in message processing. Given an arbitrary User Agent sending an INVITE to such a protected SIP proxy, its first retransmission message would be generated after T1 s. After this message, the pinhole would be generated, so that the second retransmission message after 2 * T1 s passes unhindered to the proxy. T1 a standard value from the SIP specification for a message timer. It is defined as the Round Trip Time (RTT) delay, or if that is not available, as 500 ms. Hence, given a responsive proxy, the user experiences a delay usually shorter than 2 s, before its request is processed regularly. For a voice scenario, this delay is not uncommon in, e.g., mobile call establishments, and thus is not likely to irritate the user.

If several retransmissions are required to open a pinhole, in one embodiment different pinhole parameters of the SIP communication are determined within a defined time window, and in at least one retransmission a different pinhole parameter is evaluated than in a previous transmission. This allows interleaving different pinhole parameters to open a pinhole.

In another embodiment, the pinhole is closed after some time of inactivity of SIP communication of the user agent, i.e., deleted from the "White List". This allows keeping the total number of security policies limited, and prevents malicious users from re-utilizing valid access parameters from regular users.

The invention regards in another aspect a telecommunication apparatus for mitigating Distributed Denial-of-Service attacks in packet networks that use the Session Initiation Protocol for communication. The apparatus comprises means for setting up security policies and a security entry point at which the set up security policies are deployed. The means for setting up security policies are configured to provide security policies that
- initially block all incoming SIP communication of a user agent;
- determine a pinhole parameter of the SIP communication of the user agent; and
- allow SIP communication of the user agent to pass if the subsequent or a further SIP communication of the user agent comprises the pinhole parameter.

In an embodiment, the means for setting up security policies are configured to provide a white list of stored values of pinhole parameters, check if the determined pinhole parameter is in the white list, if yes, allow the corresponding SIP Communication to pass the security entry point, and, if no, drop the corresponding SIP Communication and at the same time add the pinhole parameter to the white list.

The invention will next be explained in more detail below on the basis of exemplary embodiments with references to the Figures, in which:
- Figure 1: shows schematically elements of a telecommunications apparatus in accordance with principles of the present invention;
- Figure 2: is a flow chart of an embodiment of the inventive method;
- Figure 3: shows filtering or passing of SIM requests at a firewall in accordance with an embodiment of the invention;
- Figure 4: shows the performance of an embodiment of the invention in a test environment; and
- Figure 5: shows the performance of a further embodiment of the invention in a test environment.

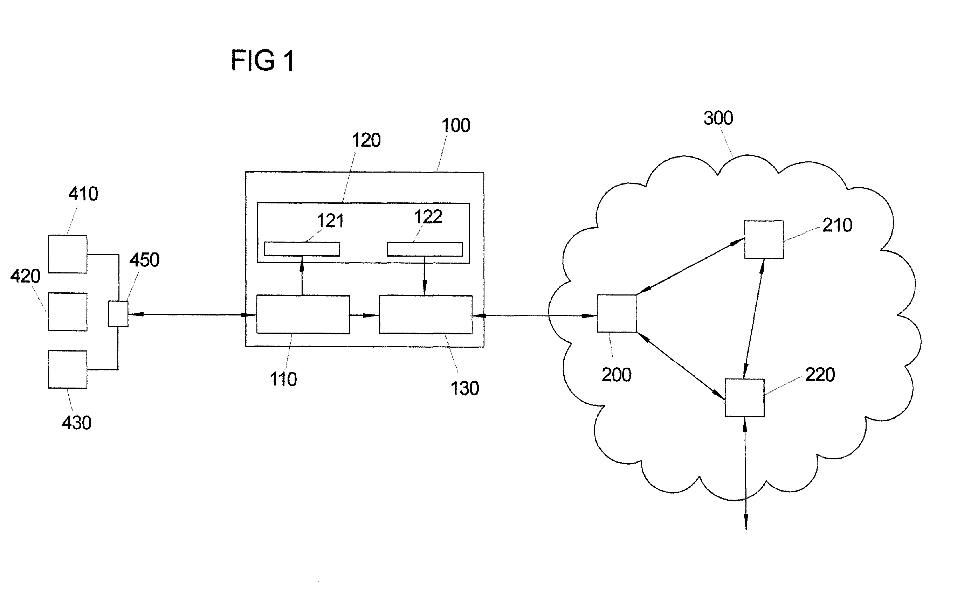

Figure 1 depicts a SIP architecture including User Agents (UAs) 410, 420, 430, a SIP-based IP network 300, a SIP Registrar 210, with respect to which users log in and announce their availability in the SIP network 300, and SIP Proxy Servers 200, 220 that forward requests within or to the appropriate SIP network. In Figure 1, SIP Proxy Server 200 is an inbound proxy 200 handling all incoming SIP requests (and possibly performing additional security checks). SIP Proxy Server 220 is an outbound proxy that regulates outgoing routing from one network to a foreign network (not shown in Figure 1).

The SIP-based IP network may be a SIP-based VolP network but could be any other SIP-based network such as an IPTV network or an IMS Next Generation Network.

A telecommunications apparatus 100 is located at the ingress connection to the SIP Proxy Server 200 and represents a network entry point for the network 300. Alternatively, the telecommunications apparatus 100 could be implemented directly at the SIP Proxy Server 200. In any case, the telecommunications apparatus 100 preferably is placed at a network 300 entry point. A common implementation would be in a Session Border Controller.

At the network level, the telecommunications apparatus 100 comprises a packet capture module 110, a pinholing algorithm unit 120 and a packet firewall 130, all of which are depicted schematically. The pinholing algorithm unit 120 includes a traffic receiver 121 and a Packet Firewall Controller 122. If the telecommunication apparatus 100 is a Session Border Controller comprising a Back-to-Back User Agent (B2BUA), it would take over the firewall role by forwarding or rejecting the processed messages. Whenever in the following the firewall and firewall rules are mentioned, this could be equally handled by the Session Border Controller and its access policies, respectively.

The packet capture module 110 of the telecommunications apparatus 100 receives incoming traffic directed towards the ingress SIP Proxy Server 200. The incoming traffic originates from one or a plurality of the User Agents 410, 420, 430 which are connected, e.g., via a PBX 450 or the like to the SIP Proxy Server 200. The traffic capture module 110 feeds captured in- and outgoing traffic to the traffic receiver 121 of the pinholing algorithm unit 120. At the pinholing algorithm unit 120, dynamic firewall rules (the pinholes) are generated in real time based on current traffic. The firewall controller 122 is responsible to install these rules at the firewall 130.

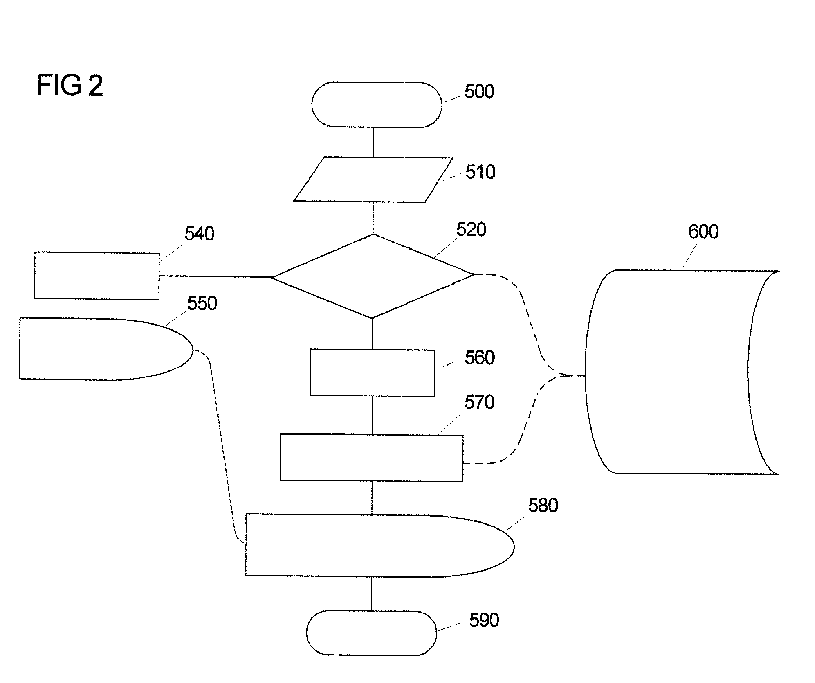

More particularly, the pinholing algorithm unit 120 provides for and updates a white list of pinhole parameters. The white list is given by the Firewall Controller 122 to the firewall 130. The firewall 130 filters out all packets which do not have a pinhole parameter which is included in the white list, as will be explained with respect to Figure 2.

The firewall 130 may be a packet filter. Packet filters operate solely at the IP level and perform the necessary action on the packet (forward / drop) according to the filter's security policy. For example, the firewall 130 could be a version of the Linux packet firewall IPtables. The firewall 130 may also be an Application-Layer Gateway that works as a relay on the application level. Additional to a packet filter it has application-layer knowledge of certain protocols (common examples are DNS, HTTP, or FTP) and applies its security policy rules also on the application level. Likewise, the firewall might be the B2BUA component of a Session Border Controller.

The packet capture module 110 may include or be connected to a scalable network bridge that works as a traffic repeater that copies the incoming traffic and directs the copy to the pinholing algorithm unit 120. The pinholing algorithm unit 120 and possible other functions of the telecommunications apparatus 100 are thus invisible for the User Agent that contacts the SIP Proxy Server 200. The architecture may operate independent from the protected SIP Proxy Server 200 by monitoring ingress and egress traffic. As an invisible component in the network, it can not actively enforce security policies. This task is delegated to the firewall 130 which is controlled by firewall controller 122. However, as discussed above, in other embodiments the pinholing algorithm and firewall may be implemented in a different manner, e.g., in a Session Border Controller (SBC) for the SIP proxy 200.

It is pointed out that the telecommunications apparatus 100 may include additional intelligence in form of further monitoring and detection algorithms. Each such further algorithm may have access to the full traffic flow from and to the SIP Proxy Server 200 and can raise alarm messages to the operator and modify the system's firewall policies to mitigate attacks.

Figure 2 shows a flow chart of an embodiment of the method of the present invention. The start of the process is indicated by reference numeral 500. If there is an incoming message 510, it is determined at 520 if a pinhole parameter of the incoming message 510 is contained in a white list 600. White list 600 is a list of stored values of pinhole parameters. For example, in one embodiment, the pinhole parameter of an incoming message is its source IP address. The source IP address of each message is determined by pinholing algorithm unit 120 and used for setting up firewall rules. The white list 600 includes a list of source IP addresses. Similarly, if as pinhole parameter of an incoming message its transaction ID or session ID was determined, white list 600 would include a white list with transaction IDs or session IDs.

If it is determined at 520 that the pinhole parameter of the incoming message 510 is included in the white list 600, the message 510 is forwarded to the SIP proxy at 540. Further, a timer for the pinhole parameter is updated at 550: after expiration of a predetermined time of the timer, the respective pinhole parameter is deleted from the white list 600. By deleting entries from the white list 600 after a predetermined time, the total amount of entries in the white list 600 remains limited.

If it is determined at 520 that the pinhole parameter is not included in white list 600, the message is dropped at 560. Accordingly, the message is not allowed to pass to the SIP proxy 200. At the same time, the pinhole parameter of the message dropped at 560 is added to the white list at 570. Further, similarly to step 550, a timer is started to delete the pinhole parameter from the white list 600 after a predetermined time. The process reaches its end at 590.

The dropping of the message at 560 is caused by the fact that the pinhole parameter of incoming message 510 is not (yet) included in white list 600. Accordingly, when the firewall controller 122 sends the white list 600 to the packet firewall 130, the packet firewall does not find the pinhole parameter of the incoming message 510 in the list and, therefore, does not allow incoming message 510 to pass.

If, however, incoming message 510 is retransmitted by the user agent who sent the original message, the message is then forwarded as its pinhole parameter is then included in white list 600. Such retransmission is in conformity with the SIP specification. Accordingly, only those messages will finally be filtered which are not in conformity with the SIP specification. In a Denial-of-Service attack, in particular if it is distributed and uses spoofed source IP addresses, a SIP attack message is generally not resend and such attacks are thus successfully filtered by the inventive method.

In a variation of the method of Figure 2, a pinhole is not created after the first request, but after an arbitrary number of retransmission messages are encountered, e.g., after the first retransmission, or after the third retransmission. Such retransmissions are counted, e.g., by the firewall controller 122. Such an embodiment has the advantage that the amount of generated firewall rules is reduced.

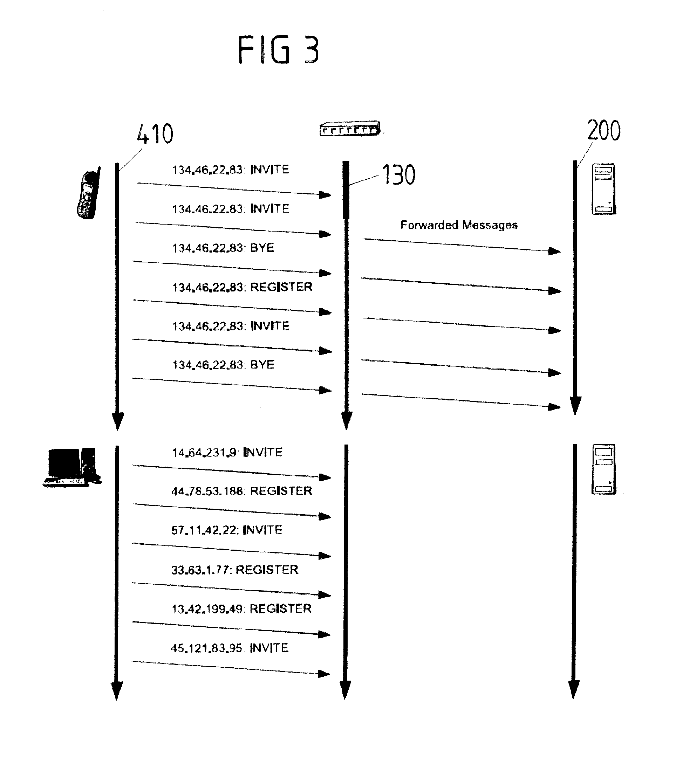

Figure 3 shows the filtering of specific SIP requests having specific source IP addresses at the adaptive firewall. As can be seen in the upper part of Figure 1, messages are forwarded by firewall 130 to SIP proxy 200 only if retransmitted by the user agent 410. It is pointed out that only the first message of a regular user agent 410 has to be retransmitted as, afterwards, in view of the identical source IP address (or another identical pinhole parameter such as transaction ID or session ID), all other messages of that user agent are forwarded to the SIP proxy 200.

On the other hand, as can be seen from the lower part of Figure 3, if messages are received once only, having different source IP addresses, such as when a Denial-of-Service attack is conducted from multiple different sources (also called bot-nets), those messages are filtered by firewall 130. Only after a request retransmission, a pinhole is thus opened and traffic may pass unhindered.

The invention has been implemented in a test environment to prove the general operation of the method and check different performance scenarios. It was used a version of the SIPp traffic generator tool to create background or "normal" SIP traffic utilising the proxy. SIPp allows automatically generating traffic scenarios in a predefined way. The SIPp traffic generator tool was used to simulate regular users that call each other randomly. It was also used a tool that is able to generate SIP messages with spoofed IP addresses to simulate DoS attacks. This traffic was directed towards the SIP proxy with the goal to disturb proxy operation.

It was created an operation evaluation scenario and a performance evaluation scenario. With the operation evaluation scenario it was proved the general operation of the method and algorithm, while with the performance scenario it was determined the performance of the implementation.

For the operation evaluation, the SIPp background generator was launched from multiple hosts to register different UAs at the SIP proxy and initiate random SIP INVITE requests. It was then started an attack with the attacker tool, by generating random requests with spoofed IP addresses starting at a rather low rate of 20 calls / second. During the whole attack it was ensured that all user-initiated requests (from SIPp) were established (i.e., no false positives) and that all attack-generated requests were blocked (i.e., no false negatives) at the firewall 130. Rules were generated at firewall controller 122 in real-time: As soon as a new SIP request was encountered, a new firewall pinholing rule was created and installed at the firewall 130.

As all regular users pass successfully the protection solution in the test, it was measured the delay to process a regular user's call, i.e., by taking the time between the initial request from the UA and the received answer from the proxy. In the test scenario without any protection established, this delay is on average 0.11 s. With the protection solution established, this delay increased to an average value of 0.61 s. This delay is due to the first request blocked by the firewall, and only the second retransmission request passing the firewall pinhole.

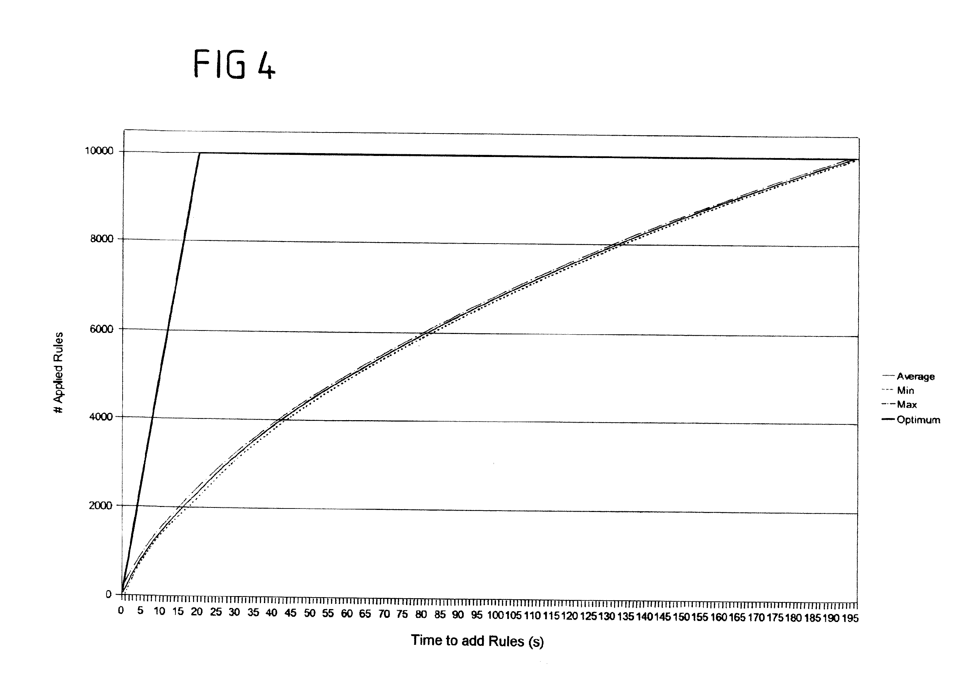

With a second test, it was measured the performance of the algorithm and its influence on latency. It was evaluated if the firewall can handle all requests i.e., dynamically update the firewall table in real-time as requests arrive. In this test, the attack generator was configured to emit 10.000 SIP requests at a rate of 500 messages per second (msg/s), as such a rate would already put a provider system under high stress. It is to be noted that that the limiting factor for the proxy is mainly processing speed and memory consumption, and not bandwidth usage. All tests were repeated 10 times to minimise measurement errors. The results from this scenario can be seen in Figure 4. As is visible, the inventive method generated all 10.000 firewall pinholes, i.e., there were no false negatives. However, as more rules were added to the firewall 130, rule adding latency increased considerably. In a real-time scenario, rules should be effective as soon as new SIP requests are encountered. In this scenario with 10.000 SIP requests at a rate of 500 msg/s, ideally after about 20 seconds all rules should have been installed at the firewall. However, the test shows that the last rule was added nearly 3 minutes after the last attack request was generated.

The delay was caused by the IPtables-based firewall engine 130. While rules are generated without delay at the firewall controller 122 of apparatus 100, IPtables cannot process these requests in real-time.

The low performance of IPtables is mainly due to its costly memory copy operation. For each new rule that is added to the firewall 130, the whole firewall rule table has to be copied from kernel-space to user-space, where a new rule is added to the table. Then, the whole table is copied back to kernel-space where the updated rule table is installed. This process is acceptable for static rule entries, however is less efficient with dynamic rule updates in real time.

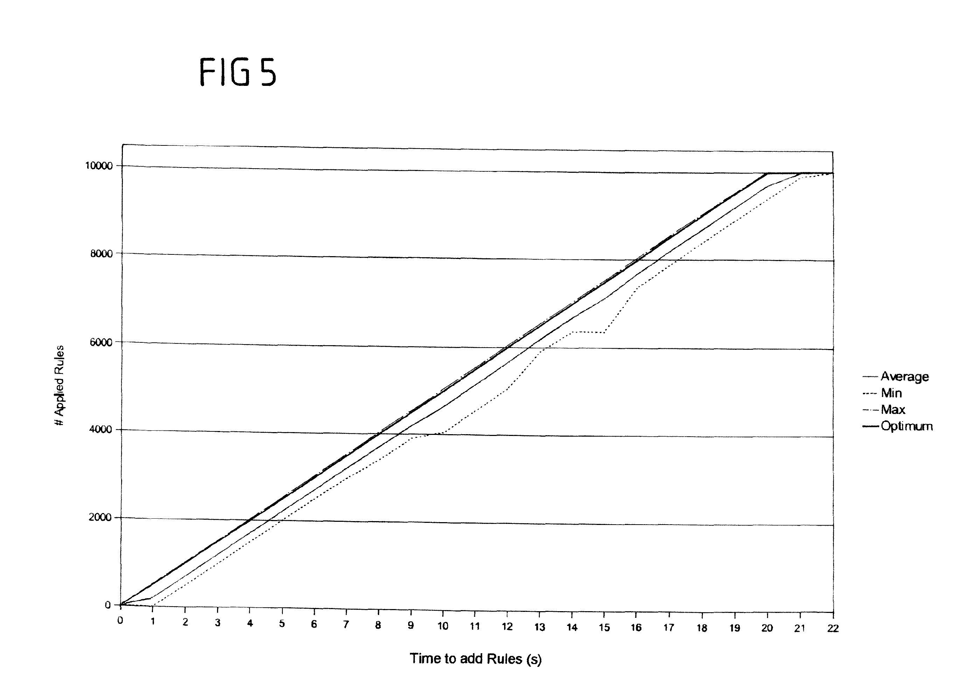

In a further embodiment, therefore, a variation was implemented. Instead of updating rules immediately after they were generated, they are accumulated and a collection of rules was transferred from Firewall Controller 122 to the firewall 130 periodically, e.g., every second. Then, instead of updating every rule individually, multiple rules were installed or removed at the firewall 130 in one operation, thus minimising time consuming copy operations. The performance increase is depicted in Figure 5. As can be seen, the update process is close to the optimum case. While 10.000 messages were generated within 20 s, all rules were installed at VolP Defender after just about 21 s.

This has, however, an effect on regular users, as the pinholes for regular users are not established immediately after the first request, but only after a short delay. However, this effect only affects the signalling path and may cause a short and acceptable delay at the sender side before the caller hears the waiting tone.

In other embodiments, a telecommunications apparatus in accordance with the present invention which represents a network entry point in the sense that it controls traffic into and/or out of the network is implemented without a firewall. Such telecommunications apparatus is configured to control SIP Communication by the inventive pinholing method on the application level.

For example, the telecommunications device is implemented in a SIP proxy or a SIP Back-to-Back. In particular, the telecommunications apparatus may be a SIP Back-to-Back user agent which is implemented by a Session Border Controller.

A SIP Back-to-Back user agent is defined in RFC 3261. Generally, a Back-to-Back user agent acts as a user agent to both ends of a SIP call. The Back-to-Back user agent is responsible for handling all SIP signaling between both ends of the call, from call establishment to termination.

The pinholing algorithm in case of a Back-to-Back user agent as network entry point could be implemented as follows. When a SIP messages (such as INVITE or REGISTER) reaches the Back-to-Back user agent, the Back-to-Back user agent does not react to the message. In particular, the SIP message "100 Trying" is not sent to the user agent, which the SIP specification would require. A pinhole parameter of the received message is however stored/memorized as discussed with respect to Figures 1 to 3. When the message is sent a second time (retransmitted), the Back-to-Back user agent recognizes the stored pinhole parameter and the received message is allowed to pass. More particularly, the Back-to-Back user agent then sends a "100 Trying" message to the user agent to confirm receipt of the message, at the same time builds up a new connection to the SIP proxy and passes the received message to the SIP proxy.

## Claims

1. A method for mitigating Distributed Denial-of-Service attacks in packet networks that use the Session Initiation Protocol (SIP) for communication, the method comprising:
- initially blocking all incoming SIP communication of a user agent (410, 420, 430) at a security entry point (130) to a network ;
- determining a pinhole parameter of the SIP communication of the user agent (410, 420, 430); and
- allowing a subsequent or further SIP communication of the user agent (410, 420, 430) to pass the security entry point (130) if the subsequent or further SIP communication of the user agent comprises the pinhole parameter.

2. The method of claim 1, **characterized in that** the step of allowing a subsequent or further SIP communication of the user agent to pass the security entry point comprises:
- setting up dynamic security policies on the basis of the determined pinhole parameter; and
- deploying the set up security policies at the security entry point (130).

3. The method of claim 2, **characterized in that** the setting up of dynamic security policies and the deploying of the set up security policies comprises:
- providing a white list (600) of stored values of pinhole parameters;
- checking (520) if the determined pinhole parameter is in the white list (600);
- if yes, allowing (540) the corresponding SIP Communication to pass the security entry point (130);
- if no, dropping (560) the corresponding SIP Communication and at the same time adding (570) the pinhole parameter to the white list (600); and
- providing the white list (600) to the security entry point (130).

4. The method of claim 2 or 3, **characterized in that** new security policies are provided to the security entry point (130) after each update.

5. The method of claim 2 or 3, **characterized in that** new security policies are accumulated and a collection of new security policies is provided to the security entry point (130) periodically.

6. The method of any preceding claim, **characterized in that** the pinhole parameter is a source IP-Address, a transaction ID and/or a session ID.

7. The method of any preceding claim, **characterized in that** SIP communication of the user agent is allowed to pass the security entry point (130) only after SIP Communication with the determined pinhole parameter has been retransmitted once or a specific number of times by the user agent.

8. The method of claim 7, **characterized in that**, within a defined time window, different pinhole parameters of the SIP communication are determined, and in at least one retransmission a different pinhole parameter is evaluated than in a previous transmission.

9. The method of any preceding claim, **characterized in that** the pinhole is closed after a defined time of inactivity of SIP communication of the user agent.

10. The method of any preceding claim, **characterized in that** the security entry point (130) is a firewall, a SIP proxy or a SIP Back-to-Back User Agent.

11. Telecommunication apparatus (100) for mitigating Denial-of-Service attacks in packet networks that use the Session Initiation Protocol (SIP) for communication, the apparatus comprising:
- means (120) for setting up security policies, the means for setting up security policies being configured to provide security policies that
- initially block all incoming SIP communication of a user agent (410, 420, 430);
- determine a pinhole parameter of the SIP communication of the user agent (410, 420, 430); and
- allow SIP communication of the user agent (410, 420, 430) to pass if the subsequent or a further SIP communication of the user agent comprises the pinhole parameter;
- a security entry point (130) at which the set up security policies are deployed.

12. The apparatus of claim 11, **characterized in that** means (200) for setting up security policies rules are configured to
- provide a white list (600) of stored values of pinhole parameters;
- check if the determined pinhole parameter is in the white list (600);
- if yes, allow the corresponding SIP Communication to pass the security entry point (130);
- if no, drop the corresponding SIP Communication and at the same time add the pinhole parameter to the white list (600).

13. The apparatus of claim 11 or 12, **characterized in that** the means (200) for setting up security policies are configured to determine and use a source IP-Address, a transaction ID and/or a session ID as pinhole parameter.

14. The apparatus of any of claims 11 to 13, **characterized in that** the means (200) for setting up firewall rules are configured to allow SIP communication of the user agent to pass the security entry point (130) only after SIP Communication with the determined pinhole parameter has been retransmitted once or a specific number of times by the user agent.

15. Computer program product comprising software code for performing the steps of claim 1 when said product is run on a computer which communicates with or implements said security entry point (130).
